# EUROPÄISCHE PATENTSCHRIFT

(11) **EP 0 492 143 B1**
(45) Veröffentlichungstag und Bekanntmachung des Hinweises auf die Patenterteilung: **01.02.1995**
(21) Anmeldenummer: 91120039.2
(22) Anmeldetag: 25.11.1991
(51) Int. Cl.: F16D 66/02

(54) **Belagverschleissanzeigeeinrichtung für eine Scheibenbremse**
Brake lining wear indicator for disc brakes
Dispositif indicateur d'usure des garnitures de friction pour freins à disques

(30) Priorität: 21.12.1990 DE 4041318
(43) Veröffentlichungstag der Anmeldung: 01.07.1992
(73) Patentinhaber: KNORR-BREMSE Systeme für Nutzfahrzeuge GmbH, 80809 München (DE)
(72) Erfinder: Hirschler, Klaus, W-8068 Pfaffenhofen/Ilm (DE); Iraschko, Johann, W-8069 Schweitenkirchen (DE); Schullerus, Otto, W-8000 München 90 (DE)
(74) Vertreter: KUHNEN, WACKER & PARTNER

(56) Entgegenhaltungen:
- CH-A- 457 161
- DE-A- 2 248 927

## Beschreibung

Die vorliegende Erfindung bezieht sich auf eine Belagverschleißanzeigeeinrichtung für eine Scheibenbremse gemäß dem Oberbegriff des Anspruchs 1.

Bei für Nutzfahrzeuge vorgesehenen Scheibenbremsen, für die mit der Erfindung eine Belagverschleißanzeigeeinrichtung geschaffen werden soll, wirkt ein zum Bremsen pneumatisch betätigter Hebel auf eine verschiebbar gelagerte Brücke ein. In dieser Brücke ist mindestens eine Nachstellspindel angeordnet, die einen Bremsbelag zur Bremsscheibe hin drückt und von einer Nachstelleinrichtung so verdreht wird, daß jeglicher Belagverschleiß ausgeglichen werden kann. Derartige pneumatische, hebelübersetzte Scheibenbremsen werden in der Praxis derzeit für Lastkraftwagen und dergleichen verwendet.

Bei pneumatischen Scheibenbremsen dieser Art sind bereits Belagverschleißanzeigeeinrichtungen bekannt, bei denen im jeweiligen Bremsbelag Sensorelemente in Form von Kontakten vorgesehen sind, die bei einem bestimmten Verschleißmaß von der Bremsscheibe überschliffen werden und so zur Aktivierung von Anzeigeelementen herangezogen werden können. Derartige Kontakte sind aufgrund ihrer Anordnung jedoch großer Hitze ausgesetzt und daher entsprechend anfällig, wobei ferner keine große Anzeigegenauigkeit erzielbar ist; auch werden die Herstellungskosten der Bremsbeläge durch derartige Kontakte heraufgesetzt.

Aus der *DE-A-2 248 927* ist eine Belagverschleißanzeigevorrichtung für die Zuspannvorrichtung einer Trommelbremse für Lastkraftwagen bekannt, bei der die Zuspannung mittels eines Hebels erfolgt, der eine Bremsnockenwelle dreht. Die Nachstellung erfolgt durch Änderung der axialen Relativlage zwischen Hebel und Bremsnockenwelle. An der Bremsnockenwelle ist ein Ausschnitt ausgebildet, dessen Größe dem nutzbaren Bremshub entspricht und an dessen Ende ein Auslöseschalter 19 angeordnet ist, der von einem am Hebel befestigten Stift betätigt wird. Die *CH-A-457 161* offenbart ebenfalls eine Belagverschleißanzeigevorrichtung für die Zuspannvorrichtung einer Trommelbremse, bei der die Zuspannung mittels eines Bremshebels erfolgt, der beim Bremsen eine Bremsnockenwelle verdreht. Die axiale Relativlage zwischen Bremshebel und Bremsnockenwelle ist mittels eines Schneckenrads durch eine Nachstelleinrichtung veränderbar. Am Bremshebel ist ortsfest ein Fühler angeordnet, der von einem Anschlag der Bremsnockenwelle bei einer solchen Relativlage ausgelöst wird, die einer ungenügenden Belagstärke entspricht.

Der Erfindung liegt die Aufgabe zugrunde, eine für eine pneumatische Scheibenbremse der im Oberbegriff des Anspruchs 1 angegebenen Art vorgesehene Belagverschleißanzeigeeinrichtung zu schaffen, die sich durch hohe Genauigkeit und große Zuverlässigkeit auszeichnet.

Diese Aufgabe wird erfindungsgemäß mit den im Kennzeichnungsteil des Anspruchs 1 angegebenen Maßnahmen gelöst.

Durch die Verlagerung des Sensiervorganges in den bremsscheibenabgewandten, rückwärtigen Gehäuseteil der Bremse ist es ermöglicht, weitgehend unbeeinflußt von Temperaturen eine genaue Verschleißsensierung und -anzeige darzustellen. Das erfindungsgemäße Nachstellelement in Form einer Nachstellerspindel ist hinsichtlich der Drehbewegung exakt geführt, so daß durch entsprechenden Abgriff der Drehbewegung des Drehwinkelgebers ein genaues Maß für den Belagverschleiß erstellbar ist. Grundsätzlich ist die Art des Drehabgriffs zur Erstellung des Belagverschleisses mit jedem Nachstellelement möglich, bei welchem nach Maßgabe der geometrischen Abhängigkeit des Axialweges von Steigung und Verdrehwinkel gearbeitet werden kann.

Diese Einrichtung eignet sich sowohl für einspindelige, mit einer Nachstellerspindel ausgestatteten Scheibenbremsen, als auch für zweispindelige Bremsen bei welchen Nachsteller-Drehbewegungen einer Spindel mittels eines Kettentriebes oder dgl . auf die zweite Spindel übertragen werden. Bei Verwendung innerhalb eines Schiebesattels ist funktionsbedingt auch das Verschleißmaß des auf der entgegengesetzten Seite der Bremsscheibe befindlichen Bremsbelages im Gesamtmaß für den Verschleiß enthalten. Eine gesonderte Veschleißanzeige für den zweiten Bremsbelag ist demnach nicht erforderlich.

Die Elemente für die Verschleißanzeige sind in baulich einfacher und gegenüber Temperaturen geschützten Weise im rückwärtigen Teil des Bremsgehäuses plaziert, was Montage und Demontage wesentlich vereinfacht. Auch ist es auf diese Weise möglich, mit Nachstellerspindeln ausgerüstete Bremsanlagen in einfacher Weise nachzurüsten.

Vorteilhafte Ausgestaltungen und Weiterbildungen sind Gegenstand der Unteransprüche.

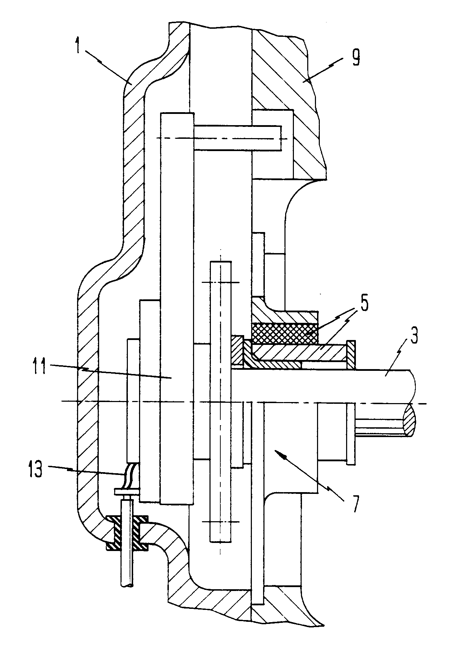

Die Erfindung wird nachfolgend anhand eines Ausführungsbeispiels unter Bezugnahme auf die beigefügte Zeichnung erläutert. Die Zeichnung zeigt in Teilschnittansicht den bremsscheibenabgewandten, rückwärtigen Gehausebereich einer Scheibenbremse unter Darstellung der zur Verschleißanzeige dienenden Drehwinkelgeber-Anordnung gemäß der Erfindung.

In der einzigen Zeichnung ist als Teilschnittansicht der rückwärtige Teil einer Scheibenbremse für Nutzfahrzeuge dargestellt; ein Gehäusedeckel 1 umgrenzt den bremsscheibenabgewandten Teil der Scheibenbremse, welche pneumatisch mit mechanischer Zuspannung beaufschlagt wird. Bei einer derartigen Ausgestaltung der Scheibenbremse, wirkt ein durch pneumatische Beaufschlagung schwenkbarer Hebel beispielsweise auf eine Anordnung aus zwei in einem gemeinsamen Gehäuse angeordneten Spindeln ein, welche mit Hilfe von Druckstücken gegenüber einem Bremsbelag auf die abzubremsende Bremsscheibe einwirken. Zur Betätigung der beiden Spindeln ist eine gemeinsame Brücke vorgesehen, welche der durch Druckmittel beaufschlagte Hebel gegen Federkraft verschiebt. In der Bremsbetätigungseinrichtung ist eine Nachstelleinrichtung integriert, welche sich in von der Bremsscheibe abgewandter Richtung rückwärtig erstreckt und z.B. die in der Zeichnung wiedergegebene Nachstellerspindel 3 enthält. Die Nachstellerspindel 3 ist in beliebiger Weise im rückwärtigen Teil des Gehäusedeckels 1 drehbar gelagert, so z. B. mittels eines mehrteiligen, vorzugsweise temperaturresistenten Lagers 5. Nachstellbewegungen entsprechend dem Belagverschleiß lösen in an sich bekannter Weise Drehbewegungen der Nachstellerspindel 3 aus, wobei bei einer zweispindeligen Anordnung ein (nicht dargestellter) Mechanismus vorhanden sein kann, welcher die Nachsteller-Drehbewegung einer Spindel mittels eines Kettenantriebes oder dgl. auf die zweite Spindel überträgt.

Die an der Nachstellerspindel 3 beim Nachstellen ausgelöste Drehbewegung wird verwendet, um eine Verschleißanzeige zu erstellen. Die Umdrehung der Nachstellerspindel 3 wird durch einen Drehwinkelgeber 7 von beliebiger Konstruktion, so z.B. durch ein Drehpotentiometer, abgegriffen, wobei unter Zuhilfenahme der geometrischen Abhängigkeit des Axialweges von Steigung und Verdrehwinkel der Nachstellerspindel das Verschleißmaß z.B. innerhalb einer Auswerteelektronik ermittelt und aufgezeigt wird. Die Sensierung der Drehbewegung bzw. des Drehweges kann gestuft oder stufenlos erfolgen; das Ausgangssignal des verwendeten Sensorelements kann folglich zur Kontrolle der Nachstellerfunktion herangezogen werden.

Im dargestellten Ausführungsbeispiel ist das rückwärtige, linke Ende der Nachstellerspindel 3 innerhalb eines mit dem Gehäuse 9 der Scheibenbremse drehfest verbundenen Statorelements 11 drehbar geführt, wobei das Ende der Nachstellerspindel z.B. mit Polstücken in vorbestimmter Anordnung bestückt sein kann, und am Statorelement Sensoren, gegenüber den Polstücken wirkend, vorgesehen sein können. um Drehbewegungen der Nachstellerspindel in über elektrische Leitungen 13 einer Auswerteelektronik zugeführte Impulse umzusetzen.

Der Aufbau des Drehwinkelgebers kann jeder beliebigen, an sich bekannten Konstruktion entsprechen, bei welcher Drehbewegungen eines Gebers mit stationär gehaltenen Sensorelementen abgegriffen und in Signale umgesetzt werden. Auch ist es möglich, das Statorelement 11 als Bestandteil des Gehäusedeckels 1 auszubilden; in diesem Fall dreht sich die Nachstellerspindel 3 mit ihrem rückwärtigen Ende innerhalb eines ortsfest gehaltenen Gehäuseeinsatzes, an welchem die Sensierung vorgenommen wird.

### Bezugszeichenliste

- 1: Gehäusedeckel
- 3: Nachstellerspindel
- 5: Lager
- 7: Drehwinkelgeber
- 9: Gehäuse
- 11: Statorelement
- 13: elektrische Leitung

## Patentansprüche

1. Belagverschleißanzeigeeinrichtung für eine Scheibenbremse, bei der ein beim Bremsen pneumatisch betätigter Hebel derart auf eine verschiebbar gelagerte Brücke einwirkt, daß mindestens eine in der Brücke angeordnete Nachstellspindel (3) einen Bremsbelag zur Bremsscheibe hin drückt, und bei der eine Nachstelleinrichtung jeden Belagverschleiß durch entsprechendes Drehen der Nachstellspindel (3) ausgleicht, *dadurch gekennzeichnet, daß* das bremsscheibenabgewandte Ende der Nachstellspindel (3) als Drehwinkelgeber (7) ausgebildet ist, der auf ein Sensorelement (11) einwirkt, das in einem bremsscheibenabgewandten, rückwärtigen Teil des Gehäuses (9) der Scheibenbremse angeordnet ist und ein den momentanen Belagverschleiß anzeigendes Signal liefert.

2. Belagverschleißanzeigeeinrichtung nach Anspruch 1, *dadurch gekennzeichnet*, *daß* der Drehwinkelgeber (7) der Nachstellspindel (3) durch das Drehelement eines Drehpotentiometers (11) gebildet ist, das als Sensorelement wirkt.

3. Belagverschleißanzeigeeinrichtung nach Anspruch 1 oder 2, *dadurch gekennzeichnet, daß* das den momentanen Belagverschleiß anzeigende Signal einer Auswertungselektronik zugeführt wird.

## Claims

1. Brake lining wear indicator for a disc brake wherein a lever, actuated pneumatically during braking, acts on a movably mounted bridge in such a way that at least one adjustment spindle (3) arranged in the bridge presses a brake lining towards the brake disc, and wherein an adjustment device compensates for any brake lining wear by appropriate rotation of the adjustment spindle (3), characterised in that the end of the adjustment spindle (3) remote from the brake disc is constructed as a rotary angle sensor (7) which acts on a sensor element (11) arranged in a rear portion of the housing (9) of the disc brake which is remote from the brake disc, and delivers a signal indicating the instantaneous brake lining wear.

2. Brake lining wear indicator according to claim 1, characterised in that the rotary angle sensor (7) of the adjustment spindle (3) is formed by the rotary element of a rotary potentiometer (11) which acts as a sensor element.

3. Brake lining wear indicator according to claim 1 or 2, characterised in that the signal indicating the instantaneous brake lining wear is conveyed to an electronic evaluation device.

## Revendications

1. Dispositif indicateur d'usure de garniture d'un frein à disques, dans lequel un levier actionné pneumatiquement lors du freinage agit sur un étrier monté coulissant, de façon qu'au moins une broche (3) de réglage montée dans l'étrier repousse une garniture de frein en directement du disque de freinage, et dans lequel un dispositif de réglage compense chaque usure de garniture par une rotation adéquate de la broche (3) de réglage
caractérisé en ce que
l'extrémité de la broche (3) de réglage, qui est éloignée du frein à disques, est constituée sous la forme d'un capteur (7) d'angle de rotation, qui agit sur un élément capteur (11), qui est monté dans une partie de l'enveloppe (9) du frein à disques se trouvant à l'arrière et éloignée du frein à disques et qui fournit un signal indiquant l'usure actuelle de la garniture.

2. Dispositif indicateur d'usure de garniture suivant la revendication 1, caractérisé en ce que le capteur (7) d'angle de rotation de la broche (3) de réglage est formé par l'élément tournant d'un potentiomètre (11) rotatif qui agit comme élément détecteur.

3. Dispositif indicateur d'usure de garniture suivant la revendication 1 ou 2, caractérisé en ce que le signal indiquant l'usure présente de la garniture est envoyé à une électronique d'exploitation.
